# EUROPEAN PATENT APPLICATION

(11) **EP 4 685 283 A1**
(43) Date of publication of application: **28.01.2026**
(21) Application number: 24773838.8
(22) Date of filing: 20.02.2024
(51) Int. Cl.: D06F 37/30, H02K 5/04

(54) **MOTOR ASSEMBLY AND WASHING MACHINE**

(30) Priority: 21.03.2023 CN 202310290105
(71) Applicant: Huai'An Welling Motor Manufacturing Co., Ltd., Huai'an, Jiangsu 223005 (CN); Foshan Welling Washer Motor Manufacturing Co., Ltd., Foshan, Guangdong 528311 (CN)
(72) Inventor: YANG, Wenyong, Jiangsu 223005 (CN); XIA, Kai, Jiangsu 223005 (CN); LV, Zhao, Jiangsu 223005 (CN); ZHENG, Licheng, Jiangsu 223005 (CN)
(74) Representative: RGTH
(86) International application number: PCT/CN2024/077772
(87) International publication number: WO 2024/193270

(57) **Abstract**

A motor assembly and a washing machine, the motor assembly (10) comprising a motor (200) and a connection seat. A motor housing (210) of the motor (200) comprises a first connection portion (211). The connection seat comprises a base (110), at least one second connection portion (120) and at least one third connection portion (130). The second connection portion (120) and the third connection portion (130) are both connected to the base (110). The second connection portion (120) and the first connection portion (211) are detachably connected, and the third connection portion (130) is used to connect to a driven apparatus. The base (110) is provided with a connection wall surface (1111), and an outer side wall of the motor housing (210) is attached to the connection wall surface (1111).

## Description

### CROSS-REFERENCE TO RELATED APPLICATION

This application claims priority to Chinese Patent Application No. 202310290105.4, filed on March 21, 2023 and entitled "MOTOR ASSEMBLY AND WASHING MACHINE," which is incorporated herein by reference in its entirety.

### FIELD

The present disclosure relates to the technical field of driving devices, and in particular, to a motor assembly and a washing machine.

### BACKGROUND

A motor assembly is connected to a driven apparatus to drive the driven apparatus. In order to facilitate the installation of the driving assembly to the driven apparatus, an existing motor assembly comprises a motor and a mounting foot that is integrally formed with a motor housing, and the mounting foot is connected and assembled to the driven apparatus to achieve the assembly of the motor.

However, when an internal structure of the driven apparatus changes, the position of a mounting structure for mounting the motor assembly inside the driven apparatus may be different, which requires the mounting foot of the motor housing to be adjusted correspondingly based on a specific position change of the mounting structure of the driven apparatus. Each adjustment requires the motor housing to be redesigned and remolded, so as to meet a mounting requirement, which undoubtedly increases production costs and design costs of the motor assembly.

In addition, when the motor housing is in a detachable connection with the mounting foot, the motor is prone to vibration relative to the mounting foot during operation, thereby increasing noise generated during operation of the motor assembly.

### SUMMARY

A main objective of the present disclosure is to provide a motor assembly and a washing machine.

In accordance with a first aspect of the present disclosure, an embodiment provides a motor assembly, comprising:
a motor, comprising a motor housing, the motor housing comprising a first connection portion; and
a connection seat, comprising a base, at least one second connection portion, and at least one third connection portion, where both the second connection portion and the third connection portion are connected to the base, the second connection portion is detachably connected to the first connection portion, and the third connection portion is configured to be connected to a driven apparatus;
where the base is provided with a connection wall surface, and an outer side wall of the motor housing is attached to the connection wall surface.

In some embodiments, the first connection portion is connected to the second connection portion by a threaded connection.

In some embodiments, the third connection portion is connected to the driven apparatus in an interference fit connection.

In some embodiments, the base is connected to the driven apparatus by a threaded connection.

In some embodiments, two second connection portions are provided and positioned opposite each other with a spacing therebetween, and the first connection portion is located between the two second connection portions.

In some embodiments, two ends of the first connection portion respectively abut against the two second connection portions.

In some embodiments, the connection wall surface is located between the two second connection portions, and two ends of the connection wall surface are respectively connected to the two second connection portions, and the first connection portion is attached to the connection wall surface.

In some embodiments, the motor assembly further comprises a threaded connecting piece, and the threaded connecting piece penetrates the first connection portion and the two second connection portions, such that the first connection portion is threadedly connected to the two second connection portions.

In some embodiments, the base comprises a buffer pad, the buffer pad is provided with the connection wall surface, and the buffer pad is pressed by the motor housing and is in a compressed state, such that the buffer pad generates a pressing force against the motor housing.

In some embodiments, there are four third connection portions respectively located at four corners of the base.

In some embodiments, the third connection portion comprises a tube connected to the base and a buffer sleeve disposed inside the tube, an axis of the tube coincides with an axis of the buffer sleeve, and the buffer sleeve is configured to connect with the driven apparatus in an interference fit connection.

In some embodiments, there are a plurality of third connection portions, and axes of the buffer sleeves of the third connection portions are arranged in parallel.

In some embodiments, each of the second connection portions is connected to one side of the base, and each of the third connection portions is connected to an opposite side of the base.

In accordance with a second aspect of the present disclosure, an embodiment provides a washing machine, comprising:
the motor assembly according to any one of the foregoing embodiments; and
a washing machine housing, where the third connection portion is connected to the washing machine housing.

### BRIEF DESCRIPTION OF DRAWINGS

To describe technical schemes in embodiments of the present disclosure or in the related art more clearly, the following briefly describes accompanying drawings required for describing the embodiments or the related art. Apparently, the accompanying drawings in the following description show merely some embodiments of the present disclosure, and those having ordinary skills in the art may still derive other drawings from structures shown in these accompanying drawings without creative efforts.
FIG. 1 is a schematic perspective diagram of a connector according to an embodiment of the present disclosure;
FIG. 2 is a schematic bottom view of a connector according to an embodiment of the present disclosure;
FIG. 3 is a first schematic sectional view of a connector according to an embodiment of the present disclosure;
FIG. 4 is a second schematic sectional view of a connector according to an embodiment of the present disclosure;
FIG. 5 is a schematic exploded view of a motor assembly from a first perspective according to an embodiment of the present disclosure;
FIG. 6 is a schematic perspective diagram of a motor assembly according to an embodiment of the present disclosure;
FIG. 7 is a schematic exploded view of a motor assembly from a second perspective according to an embodiment of the present disclosure;
FIG. 8 is a schematic exploded view of a sectional view of a combination of a connector and a motor housing according to an embodiment of the present disclosure;
FIG. 9 is a schematic exploded view of a sectional view of a combination of a connector and a motor housing in another embodiment of the present disclosure;
FIG. 10 is a schematic exploded view of a sectional view of a combination of a connector, a mounting structure, and a motor output shaft according to an embodiment of the present disclosure; and
FIG. 11 is a schematic exploded view of a sectional view of a combination of a connector, a mounting structure, and a motor output shaft according to an embodiment of the present disclosure.

Reference numerals:
10: motor assembly;
100: connector; 110: base; 111: buffer pad; 1111: connection wall surface; 120: second connection portion; 130: third connection portion; 131: tube; and 132: buffer sleeve;
200: motor; 210: motor housing; 211: first connection portion; and 220: output shaft;
300: mounting structure; and
400: threaded connecting piece.

The implementation of the objectives, functions, and advantages of the present disclosure will be further described in conjunction with embodiments and with reference to the accompanying drawings.

### DETAILED DESCRIPTION

The technical schemes in embodiments of the present disclosure are clearly and completely described below in conjunction with accompanying drawings in embodiments of the present disclosure. Apparently, the described embodiments are merely some but not all embodiments of the present disclosure. All other embodiments obtained by those having ordinary skills in the art based on embodiments of the present disclosure without creative efforts shall fall within the protection scope of the present disclosure.

A motor assembly is connected to a driven apparatus to drive the driven apparatus. For ease of description, the following uses an example of a motor assembly used in a washing machine, where the portion of the washing machine excluding the motor assembly is the driven apparatus. The washing machine comprises a housing, a drum disposed in the washing machine housing, and a motor that drives the drum to rotate. In order to facilitate the installation of the motor to the washing machine housing, existing motors for washing machines are directly integrally formed with a mounting foot on a motor housing, and the mounting foot is connected and assembled to a mounting structure of the washing machine housing to achieve the assembly of the motor.

However, due to the differences in washing machine model among various washing machine manufacturers, the internal configurations of washing machines vary significantly. Therefore, positions of motor mounting structures inside the washing machine housing differ accordingly. In an embodiment, when a washing machine housing comprises three mounting structures (in other embodiments, there may be one, two, four, or other quantities of mounting structures), and the motor housing comprises three corresponding connecting feet, the motor is mounted on the washing machine housing such that each connecting foot aligns with its respective mounting structure. However, for washing machines from other manufacturers, variations in the relative distances between these three mounting structures on the washing machine housing render the original motor incompatible. Since the connecting feet on the motor housing are integrally formed with the motor housing itself, redesigning the motor housing becomes necessary to achieve proper assembly with the washing machines. The above redesigned process requires remolding motor housing, which inevitably increases both motor production costs and engineering design expenses.

In some embodiments, when the motor housing is detachably connected to the mounting feet, the motor is prone to vibration relative to the mounting feet during operation, thereby increasing noise generated during operation of the motor assembly.

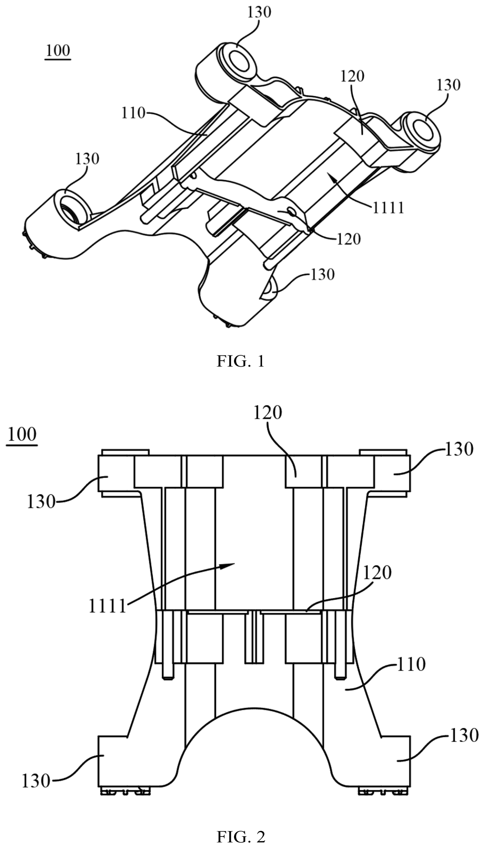

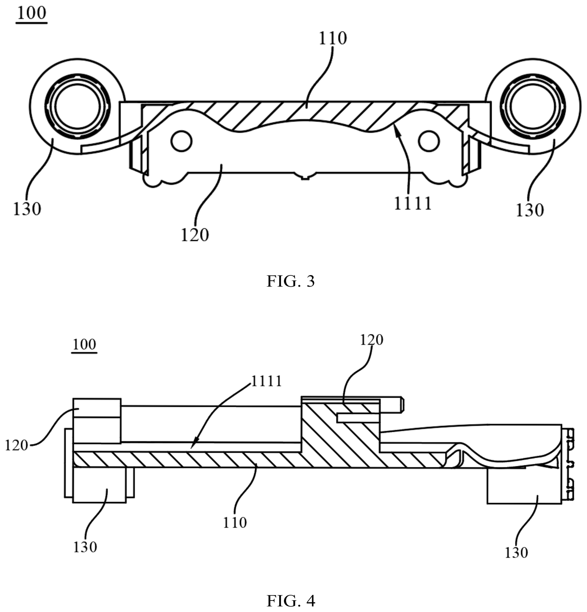

In view of the above, with reference to FIG. 1 to FIG. 11, an embodiment of the present disclosure provides a motor assembly 10. The motor assembly 10 comprises a motor 200 and a connector 100. The connector 100 is configured to assemble the motor 200 onto a driven apparatus, and specifically onto a washing machine housing. In an actual assembly process, the motor 200 is first assembled onto the connector 100, and the connector 100 is then assembled onto a mounting structure 300 of the washing machine housing, so as to assemble the motor 200 onto the washing machine housing.

With reference to FIG. 1 to FIG. 5, the motor 200 comprises a motor housing 210, and the motor housing 210 comprises a first connection portion 211. The connector 100 comprises a base 110, at least one second connection portion 120, and at least one third connection portion 130.

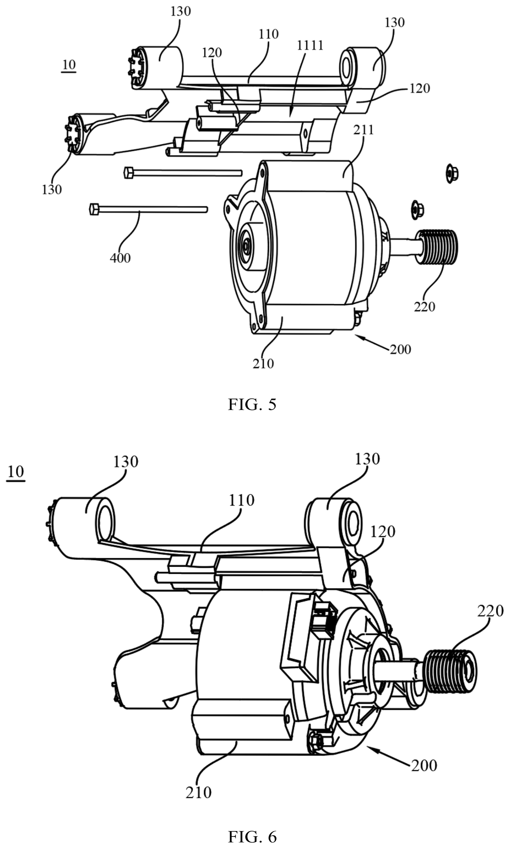

The quantity, specific structure, and arrangement position of the first connection portion 211 are determined according to actual needs. In some embodiments, with reference to FIG. 5 to FIG. 7, to enhance both the visual integration of the motor housing 210 and the structural stability of the first connection portion 211, the first connection portion 211 is located on an outer peripheral side of the motor housing 210 and along a direction parallel to a rotation axis of the motor 200 with one end flush with an end face of the motor housing 210 opposite to an output shaft 220, and the other end approaching an end face of the motor housing 210 where an output shaft 220 is disposed. In an embodiment, the motor housing 210 comprises two first connection portions 211 that are spaced around a circumferential direction of the rotation axis of the motor 200.

At least one second connection portion 120 is provided, and specifically, there may be one, two, three, or four second connection portions 120. Regardless of the quantity of second connection portions 120, each second connection portion 120 is connected to the base 110. Each second connection portion 120 is configured to be detachably connected to the motor 200, and specifically detachably connected to a first connection portion 211 of the motor housing 210. The quantity of second connection portions 120 depends on the quantity, structure, and connection requirement of the first connecting portion 211. For ease of description, in an embodiment, two second connection portions 120 are provided. A manner for connecting the second connection portion 120 and the first connection portion 211 depends on an actual need. In some embodiments, the second connection portion 120 may be connected to the first connection portion 211 in a threaded connection, by clamping, or in other manners. With reference to FIG. 1 and FIG. 5, the second connection portion 120 is threadedly connected to the first connection portion 211. When there are a plurality of second connection portions 120, the second connection portions 120 may be connected to the first connection portion 211 in the same or different manners. In an embodiment, when there are two second connection portions 120, one of the second connection portions 120 may be threadedly connected to the first connection portion 211, and the other second connection portion 120 may be clamped to the first connection portion 211. In this embodiment, the second connection portions 120 are connected to the first connection portion 211 in the same manner, and all the second connection portions 120 are connected to the first connection portion 211 by a threaded connection.

At least one third connection portion 130 is provided, and specifically, there may be one, two, three, or four third connection portions 130. Regardless of the quantity of the third connection portions 130, each third connection portion 130 is connected to the base 110. Each third connection portion 130 is configured to be connected to the driven apparatus, and specifically, each third connection portion 130 is configured to be connected to the washing machine housing. The quantity of third connection portions 130 may be determined based on a quantity of mounting structures 300 on the washing machine housing. In an embodiment, when there are two mounting structures 300 on the washing machine housing, there may be two third connection portions 130. When there are three mounting structures 300 on the washing machine housing, there may be three third connection portions 130. For ease of description, the following embodiment is given with four third connection portions 130 (this arrangement is applicable to the case where the washing machine housing has four mounting structures 300).

The base 110 may or may not be connected to the motor housing 210. In this embodiment, when there are two second connection portions 120, and the two second connection portions 120 are both threadedly connected to the motor housing 210, the base 110 is not connected to the motor housing 210. Similarly, the base 110 may or may not be connected to the washing machine housing. In this embodiment, when all the four third connection portions 130 are connected to the washing machine housing in an interference fit connection, the base 110 may be threadedly connected to the washing machine housing.

In this embodiment, after the motor 200 is connected to the connector 100, subsequent attachment of the connector 100 to the washing machine housing completes the assembly of the motor 200 to the washing machine housing. Moreover, for different washing machine models with varied mounting structures 300 positions on the washing machine housing (that is, a spacing between two mounting structures 300 may be wider or smaller), it is only necessary to adjust the positions of the third connection portions 130 on the connector 100 to fit with the washing machine housing. Moreover, in the foregoing adjustment process, only the connector 100 needs to be redesigned and manufactured, which requires less design workload and lower molding costs compared with redesigning and manufacturing the entire motor housing 210 in the related art, thereby reducing overall production costs for the motor 200.

Moreover, when the connector 100 in this embodiment of the present disclosure is used to mount the motor 200, the first connection portion 211 on the motor housing 210 does not need to match the mounting structure 300 on the washing machine housing, and the second connection portion 120 on the connector 100 actively matches a specific structure of the first connection portion 211. Therefore, the design of the first connection portion 211 on the motor housing 210 can be more flexible and reasonable.

In addition, in this embodiment, the base 110 is provided with a connection wall surface 1111. After the first connection portion 211 is connected to the second connection portion 120, an outer side wall of the motor housing 210 abuts against the connection wall surface 1111. This configuration significantly increases the contact area between the motor 200 and the connection seat when the motor 200 is connected to the connection seat, resulting in enhanced connection rigidity while minimizing vibration tendencies of the motor 200 relative to the connection seat, thereby reducing noise generated during operation of the motor assembly 10. The specific abutment location between the motor housing 210 and the connection wall surface 1111 may vary depending on actual needs. In some embodiments, the motor 200 may be configured such that a wall surface outside the first connection portion 211 abuts against the connection wall surface 1111. In some other embodiments, a side wall of the first connection portion 211 on the motor housing 210 may directly contact the connection wall surface 1111.

After the connector 100 is connected to the motor 200, a relative positional relationship between the two depends on an actual need. In some embodiments, after the connector 100 is connected to the motor 200, the connector 100 and the motor 200 are arranged in a direction parallel to the rotation axis of the motor 200. In this case, the first connection portion 211 of the motor housing 210 may be disposed at an end of the motor housing 210 opposite to the output shaft 220. With reference to FIG. 5 to FIG. 7, in some other embodiments, after the connector 100 is connected to the motor 200, the connector 100 and the motor 200 are arranged in a direction perpendicular to the rotation axis of the motor 200. In addition, the first connection portion 211 of the motor housing 210 is located on the outer peripheral side of the motor housing 210.

With reference to FIG. 5 to FIG. 7, in some embodiments, two second connection portions 120 are provided and positioned opposite each other with a spacing therebetween. The two second connection portions 120 are configured to be connected to the first connection portion 211 such that the first connection portion 211 is located between the two second connection portions 120. In this scheme, after the first connection portion 211 is connected to the two second connection portions 120, the two second connection portions 120 may restrict displacement of the motor 200 in a direction from one of the second connection portions 120 to the other second connection portion 120, thereby improving connection stability between the motor 200 and the connector 100.

Further, in some embodiments, after the two second connection portions 120 are connected to the first connection portion 211, two ends of the first connection portion 211 may respectively abut against the two second connection portions 120. In this scheme, the two second connection portions 120 may clamp the first connection portion 211, such that the connection stability between the two second connection portions 120 and the first connection portion 211 may be further improved, and a predetermined position of the two second connection portions 120 may be formed relative to the first connection portion 211, facilitating assembly between the two second connection portions 120 and the first connection portion 211.

When there are two first connection portions 211, in some embodiments, after the motor 200 is connected to the connector 100, only one of the first connection portions 211 may be arranged between the two second connection portions 120. With reference to FIG. 5 to FIG. 7, in some other embodiments, the two first connection portions 211 may be both located between the two second connection portions 120. Further, the two second connection portions 120 may jointly clamp the two first connection portions 211.

A specific manner for connecting the second connection portion 120 and the first connection portion 211 depends on an actual need. With reference to FIG. 5 to FIG. 7, in some embodiments, the motor assembly 10 further comprises a threaded connecting piece 400, and the threaded connecting piece 400 is configured to penetrate the first connection portion 211 and the two second connection portions 120, such that the first connection portion 211 is threadedly connected to the two second connection portions 120. Specifically, the first connection portion 211 and one of the second connection portions 120 are provided with a through hole, and the other second connection portion 120 is provided with a threaded hole. The threaded connecting piece 400 penetrates the two through holes and then is threadedly connected to the threaded hole, thereby the two second connection portions 120 is fixed to the first connection portion 211. When there are two first connection portions 211 and the two first connection portions 211 are both located between the two second connection portions 120, each of the two first connection portions 211 is provided with a through hole, one of the second connection portions 120 is provided with two through holes, the two through holes in the second connection portion 120 are interconnected with the through holes in the two first connection portions 211 in one-to-one correspondence, the other second connection portion 120 is provided with two threaded holes, and the two threaded holes in the second connection portion 120 are interconnected with the through holes in the two first connection portions 211 in one-to-one correspondence. The connector 100 comprises two threaded connecting pieces 400, and the two threaded connecting pieces 400 respectively penetrate the through holes in the second connection portion 120, the through holes in the first connection portions 211, and the threaded holes in the second connection portion 120 correspondingly.

A specific arrangement position of the connection wall surface 1111 depends on an actual need. With reference to FIG. 5 to FIG. 9, in some embodiments, the connection wall surface 1111 is located between the two second connection portions 120, and is connected to the two second connection portions 120. This scheme may facilitate attachment of the motor housing 210 to the connection wall surface 1111. Further, the base 110 is configured such that when the first connection portion 211 is connected to the two second connection portions 120, the connection wall surface 1111 presses against the side wall of the first connection portion 211. That is to say, after the two second connection portions 120 are connected to the first connection portion 211, a pressing force is generated between the first connection portion 211 and the connection wall surface 1111, such that the motor 200 and the base 110 may be in closer contact, thereby reducing an amplitude of vibration generated relative to the base 110 during operation of the motor 200, and reducing noise generated during operation of the motor 200.

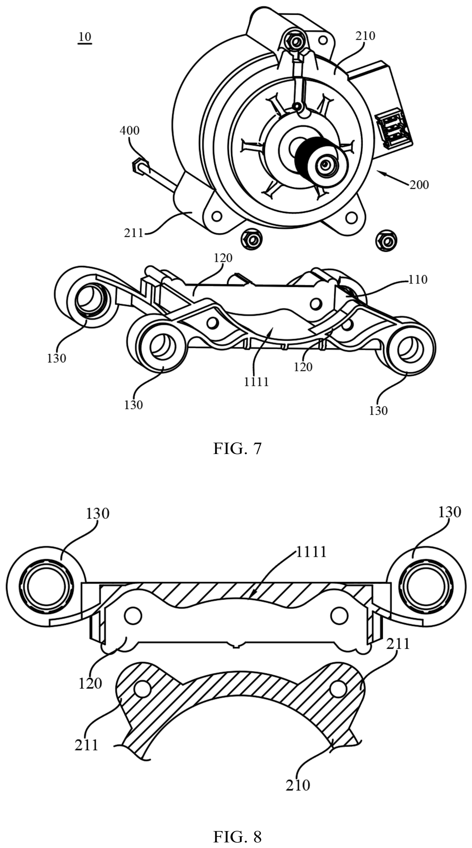

With reference to FIG. 7 to FIG. 9, when the motor 200 has two first connection portions 211, the connection wall surface 1111 may press against side walls of the two first connection portions 211. Further, when the two first connection portions 211 are spaced apart along the circumferential direction of the rotation axis of the motor 200, the motor housing 210 may comprise an intermediate wall surface located between the two first connection portions 211. After the motor 200 is assembled with the connector 100, wall surfaces of the two first connection portions 211 facing the connection wall surface 1111 and the intermediate wall surface are attached to the connection wall surface 1111, and a positive pressure is generated between the connection wall surface 1111 and the wall surfaces of the two first connection portions 211 facing the connection wall surface 1111 and between the connection wall surface 1111 and the intermediate wall surface.

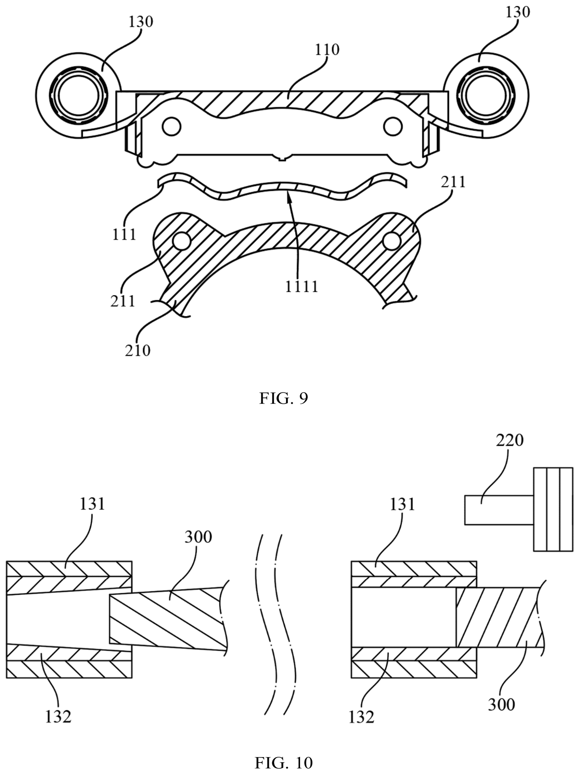

To facilitate generation of proper positive pressure between the motor 200 and the base 110, with reference to FIG. 9, in some embodiments, the base 110 further comprises a buffer pad 111 disposed between the two second connection portions 120, and the buffer pad 111 comprises the connection wall surface 1111. The buffer pad 111 is configured to be compressed by the first connection portion 211 when the first connection portion 211 is connected to the two second connection portions 120, thereby generating a pressing force against the first connection portion 211. In this scheme, in a process of assembling the motor 200, the first connection portion 211 of the motor housing 210 is first embedded between the two second connection portions 120, the first connection portion 211 is brought into contact with the connection wall surface 1111 of the buffer pad 111. Then the motor housing 210 is pressed, such that the buffer pad 111 is continuously squeezed and pressed by the first connection portion 211 and is in a compressed state until the through hole of the first connection portion 211 is aligned with the holes in the second connection portions 120. Then, the threaded connecting piece 400 passes through the holes in the two second connection portions 120 and the through hole in the first connection portion 211, thereby fixing the relative position between the first connection portion 211 and the two second connection portions 120. Since the buffer pad 111 is compressed, the buffer pad 111 generates a pressing force to press the first connection portion 211, such that the first connection portion 211 and the connection wall surface 1111 may be in close contact along the direction perpendicular to the rotation axis of the motor 200, thereby reducing vibration noise during operation of the motor 200, and a buffer effect may be further generated between the motor 200 and the base 110, thereby reducing an impact force from the motor 200 to the base 110, and improving the service life of the connector 100.

A manner for connecting the third connection portion 130 and the washing machine housing depends on an actual need. In some embodiments, the third connection portion 130 may be connected to the washing machine housing by a threaded connection, through interference fit, by welding, gluing, clamping, or in other manners. With reference to FIG. 1 to FIG. 4 and FIG. 10 to FIG. 11, in this embodiment, the third connection portion 130 is connected to the washing machine housing in an interference fit connection. When there are multiple third connection portions 130, the third connection portions 130 may be connected to the washing machine housing in the same or different manners. In an embodiment, when there are two third connection portions 130, one of the third connection portions 130 may be threadedly connected to the washing machine housing, and the other third connection portion 130 may be connected to the washing machine housing in an interference fit connection. In this embodiment, the third connection portions 130 are connected to the washing machine housing in the same manner, that is, four third connection portions 130 are connected to the washing machine housing in an interference fit connection.

A specific structure for connecting the washing machine housing and the third connection portion 130 through interference fit depends on an actual need. In some embodiments, the washing machine housing comprises a connecting hole, the third connection portion 130 comprises a connecting column, and the third connection portion 130 is inserted into the connecting hole of the washing machine and is connected to the connecting hole in an interference fit connection. In some embodiments, the third connection portion 130 comprises a connecting hole, the washing machine housing comprises a connecting column, and the connecting column of the washing machine housing is inserted into the connecting hole of the third connection portion 130 for interference fit with the third connection portion 130. In some embodiments, one of the mounting structures 300 of the washing machine housing comprises a connecting hole, one of the third connection portions 130 comprises a connecting column, and the connecting column of the third connection portion 130 is inserted into the connecting hole of the mounting structure 300, so that the two are interference fit with each other. Another mounting structure 300 of the washing machine housing comprises a connecting column, another third connection portion 130 comprises a connecting hole, in this embodiment, the connecting column of the mounting structure 300 is inserted into the connecting hole of the third connection portion 130, so that the two are interference fit with each other. With reference to FIG. 5 to FIG. 7, in this embodiment, the four third connection portions 130 each comprise a connecting hole, and the four mounting structures 300 of the washing machine housing each comprise a connecting column, and the four connecting columns are inserted into the four connecting holes in one-to-one correspondence, so that they are interference fit with each other.

With reference to FIG. 5 to FIG. 7, in some embodiments, there are four third connection portions 130, and the four third connection portions 130 are respectively located at four corners of the base 110. In this scheme, the four corners of the connector 100 may be stressed more uniformly, such that the connector 100 and the washing machine housing are connected more stably. Moreover, after all the four third connection portions 130 are connected to the washing machine housing by an interference fit connection, the base 110 may be threadedly connected to the washing machine housing, to prevent the third connection portions 130 from being separated from the mounting structures 300 of the washing machine housing. Specifically, the base 110 may be connected to the washing machine housing by using a screw, and a length direction of the screw is perpendicular to an axial direction of a connecting hole of at least one third connection portion 130.

Taking into account that the motor 200 vibrates during operation and the vibration is easily transmitted to the connection between the third connection portion 130 and the mounting structure 300 of the washing machine housing, in order to further prevent loosening between the third connection portion 130 and the mounting structure 300 of the washing machine housing, with reference to FIG. 5 to FIG. 7 and FIG. 10 to FIG. 11, in some embodiments, the third connection portion 130 comprises a tube 131 connected to the base 110 and a buffer sleeve 132 disposed inside the tube 131. An axis of the tube 131 coincides with an axis of the buffer sleeve 132, and the buffer sleeve 132 is configured for interference fit with the mounting part. The buffer sleeve 132 may be connected to the tube 131 through interference fit or adhesive bonding. The buffer sleeve 132 may be made of an elastic material, such as silicone, or rubber. When the motor 200 vibrates, the buffer sleeve 132 may reduce the vibration, which may reduce a probability of the mounting structure 300 of the washing machine housing being separated from the buffer sleeve 132, and may reduce a vibration amplitude of the washing machine housing, thereby reducing noise generated during operation of the washing machine.

In some embodiments, axes of buffer sleeves 132 of all of the third connection portions 130 are arranged in parallel, which may facilitate assembly of the buffer sleeves 132. Further, when there are four third connection portions 130, and the four third connection portions 130 are respectively located at four corners of the base 110, axes of two of the buffer sleeves 132 may be arranged to coincide with each other, and axes of the other two buffer sleeves 132 may be arranged to coincide with each other, and the two coincident axes are arranged parallel to each other.

With reference to FIG. 5 to FIG. 7, in some embodiments, all the second connection portions 120 are connected to one side of the base 110 (which may be arranged on a lower side of the base 110 in a specific product), and all the third connection portions 130 are connected to an opposite side of the base 110 (which may be arranged on an upper side of the base 110 in a specific product). In this scheme, after the connector 100 is connected to the motor 200 and the washing machine housing, the connector 100 is located between the motor 200 and the washing machine housing, and the connector 100 may implement a certain buffering function, thereby reducing vibration transmitted from the motor 200 to the washing machine housing, and reducing operation noise of the washing machine. In some other embodiments, all the second connection portions 120 and the third connection portions 130 may be located on the same side of the base 110, such that after the connector 100 is connected to the motor 200 and the washing machine housing, the connector 100 is located on a side of the motor 200 away from the washing machine housing.

With reference to FIG. 10, in some embodiments, after the connector 100 is assembled with the motor 200, it exhibits two third connection portions 130 positioned distal to the output shaft 220 of the motor 200 and two third connection portions 130 positioned proximal to the output shaft 220 of the motor 200. The buffer sleeves 132 within the two proximal third connection portions 130 (near the output shaft 220 of the motor 200) have inner holes in a cylindrical shape. The buffer sleeves 132 of the two distal third connection portions 130 (away from the output shaft 220 of the motor 200) have inner holes in a truncated cone shape with a reducing cross-sectional area along the axis away from the output shaft 220 of the motor 200. In this scheme, since the inner holes of the buffer sleeves 132 proximal to the output shaft 220 of the motor 200 are in the cylindrical shape, when the motor 200 vibrates, the buffer sleeves 132 and the mounting structures 300 of the washing machine housing are not prone to displacement in directions parallel to axes of the inner holes, such that the buffer sleeves 132 are not easily separated from the washing machine housing. Concurrently, the truncated cone geometry of the buffer sleeves 132 distal to the output shaft 220 of the motor 200 introduces assembly tolerance compensation, enabling successful connector 100 installation even when minor positional deviations exist between the third connecting portions 130 and the corresponding mounting structures 300 of the washing machine housing, ultimately reducing machining costs of the connector 100 through relaxed positional precision requirements..

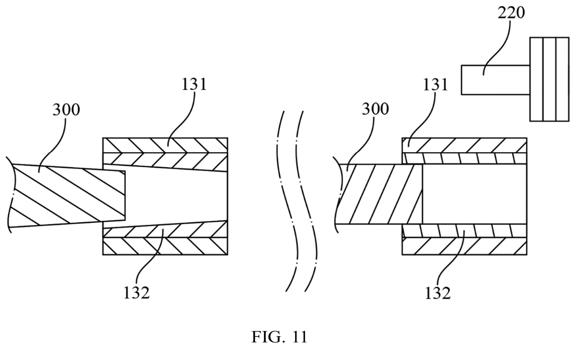

With reference to FIG. 11, in some embodiments, after the connector 100 is assembled with the motor 200, it exhibits two third connection portions 130 positioned distal to the output shaft 220 of the motor 200 and two third connection portions 130 positioned proximal to the output shaft 220 of the motor 200. The buffer sleeves 132 within the two proximal third connection portions 130 (near the output shaft 220 of the motor 200) have inner holes in a cylindrical shape. The buffer sleeves 132 of the distal two third connection portions 130 (away from the output shaft 220 of the motor 200) have inner holes in a truncated cone shape with an increasing cross-sectional area along the axis away from the output shaft 220 of the motor 200. In this scheme, when the motor 200 vibrates, since hole walls of the inner holes of the buffer sleeves 132 away from the output shaft 220 of the motor 200 are more oriented toward the output shaft 220 of the motor 200, the buffer sleeves 132 and the mounting structures 300 of the washing machine housing are less prone to displacement in directions parallel to hole axes of the inner holes, such that the third connection portions 130 away from the output shaft 220 of the motor 200 are less easily separated from the mounting structures 300 of the washing machine housing, thereby improving connection stability of the connector 100.

An embodiment of a second aspect of the present disclosure provides a washing machine. The washing machine comprises the motor assembly 10 in any one of the foregoing embodiments and a washing machine housing, and the connector 100 is connected to the washing machine housing in the connection manner in any one of the foregoing embodiments.

Compared with the related art, in the technical scheme of the present disclosure, the motor assembly comprises a motor and a connection seat. The motor comprises a motor housing, and the motor housing comprises a first connection portion. The connection seat comprises a base, at least one second connection portion, and at least one third connection portion. The first connection portion is detachably connected to the second connection portion, and the third connection portion is detachably connected to a driven apparatus. In this scheme, after the motor is connected to the connection seat, the motor may be assembled onto the driven apparatus by connecting the connection seat to the driven apparatus. Moreover, when a position or shape of a mounting structure for mounting the motor assembly on the driven apparatus changes, it is only necessary to adjust a position or structure of the third connection portion on the connection seat to achieve matching with the driven apparatus. In the foregoing adjustment process, only the connection seat needs to be redesigned and manufactured, which requires less design workload and lower molding costs compared with redesigning and manufacturing the entire motor housing in the related art, thereby reducing overall production costs of the motor assembly.

Moreover, when the connection seat in this embodiment of the present disclosure is used to fit the motor, a connecting structure on the motor housing does not need to match the mounting structure on the driven apparatus. Therefore, the design of a structure of the first connection portion on the motor housing may be more flexible and reasonable.

Further, in the technical scheme of the present disclosure, the base is provided with a connection wall surface, and after the first connection portion is connected to the second connection portion, an outer side wall of the motor housing is attached to the connection wall surface. In this scheme, after the motor is connected to the connection seat, a contact area between the motor and the connection seat is larger, such that the motor and the connection seat are connected more tightly, thereby reducing a probability of the motor vibrating relative to the connection seat, and reducing noise generated during operation of the motor assembly.

It should be noted that if there is a directional indication (such as up, down, left, right, front, or back) in embodiments of the present disclosure, the directional indication is used only to explain a relative positional relationship, movement, or the like between parts in a specific posture. If the specific posture changes, the directional indication changes accordingly.

In addition, if there are descriptions such as "first," "second", etc., in embodiments of the present disclosure, the descriptions such as "first" and "second" are used only for descriptive purposes and cannot be understood as indicating or implying relative importance or implicitly indicating a quantity of technical features indicated. Therefore, a feature defined with "first" or "second" may explicitly or implicitly comprise at least one such feature. In addition, "and/or" in the specification means comprising three parallel schemes. For example, "A and/or B" comprises a scheme A, a scheme B, or a scheme A plus B. In addition, the technical schemes in the embodiments can be combined with each other, provided that the combination can be implemented by persons of ordinary skill in the art. When a combination of technical schemes is contradictory or cannot be implemented, it should be considered that such a combination of technical schemes does not exist and is not within the protection scope claimed in the present disclosure.

The foregoing descriptions are merely preferred embodiments of the present disclosure, and do not limit the patent scope of the present disclosure. All equivalent structural changes made based on the inventive concept of the present disclosure by using the contents of the specification and drawings of the present disclosure, or directly/indirectly used in other related technical fields are encompassed in the scope of the present disclosure.

## Claims

1. A motor assembly, configured to be mounted on a driven apparatus, the motor assembly comprising:
a motor, comprising a motor housing, wherein the motor housing comprises a first connection portion; and
a connection seat, comprising a base, at least one second connection portion, and at least one third connection portion, wherein both the second connection portion and the third connection portion are connected to the base, the second connection portion is detachably connected to the first connection portion, and the third connection portion is configured to be connected to the driven apparatus;
wherein the base is provided with a connection wall surface, and an outer side wall of the motor housing is attached to the connection wall surface.

2. The motor assembly of claim 1, wherein,
the first connection portion is connected to the second connection portion by a threaded connection; and/or
the third connection portion is configured to be connected to the driven apparatus in an interference fit connection; and/or
the base is configured to be connected to the driven apparatus by a threaded connection.

3. The motor assembly of claim 1 or 2, wherein two second connection portions are provided and positioned opposite each other with a spacing therebetween, and the first connection portion is located between the two second connection portions.

4. The motor assembly of claim 3, wherein two ends of the first connection portion respectively abut against the two second connection portions.

5. The motor assembly of claim 3 or 4, wherein the connection wall surface is located between the two second connection portions, such that two ends of the connection wall surface are respectively connected to the two second connection portions, and the first connection portion is attached to the connection wall surface.

6. The motor assembly of any one of claims 3 to 5, further comprising a threaded connecting piece, wherein the threaded connecting piece penetrates the first connection portion and the two second connection portions, such that the first connection portion is connected to the two second connection portions by the threaded connection.

7. The motor assembly of any one of claims 1 to 6, wherein the base comprises a buffer pad provided with the connection wall surface, and the buffer pad is pressed by the motor housing and is in a compressed state, such that the buffer pad generates a pressing force against the motor housing.

8. The motor assembly of any one of claims 1 to 7, wherein four third connection portions are provided, and the four third connection portions are respectively located at four corners of the base.

9. The motor assembly of any one of claims 1 to 8, wherein the third connection portion comprises a tube connected to the base and a buffer sleeve disposed in the tube, such that an axis of the tube coincides with an axis of the buffer sleeve, and the buffer sleeve is configured to connect with the driven apparatus in an interference fit connection.

10. The motor assembly of claim 9, wherein a plurality of third connection portions are provided, and axes of the buffer sleeves of the third connection portions are arranged in parallel.

11. The motor assembly of any one of claims 1 to 10, wherein all the second connection portions are connected to a side of the base, and all the third connection portions are connected to an opposite side of the base.

12. A washing machine, comprising a motor assembly of any one of claims 1 to 11 and a washing machine housing, wherein a third connection portion is connected to the washing machine housing.
